# EUROPEAN PATENT APPLICATION

(11) **EP 4 477 917 A1**
(43) Date of publication of application: **18.12.2024**
(21) Application number: 23179504.8
(22) Date of filing: 15.06.2023
(51) Int. Cl.: F16F 9/46, F16F 9/34, F16K 3/24, F16K 31/50, F16K 39/04

(54) **ELECTRONICALLY CONTROLLED VALVE FOR A STEERING DAMPER**

(71) Applicant: Öhlins Racing AB, 194 27 Upplands Väsby (SE)
(72) Inventor: LINDBLAD, Geir, 195 31 Märsta (SE)
(74) Representative: AWA Sweden AB

(57) **Abstract**

The disclosure relates to a valve (1) for regulating a damper medium flow in a steering damper, the valve (1) comprising an outer valve case (2) extending around a longitudinal axis (A) from a first end (4) to a second end (6); a valve body (10) arranged in the outer valve case (2) and longitudinally slidable therein; and a housing (20) connected with the outer valve case (2), wherein the housing (20) houses an electronic actuator (22) operatively coupled to the valve body (10) for moving the valve body (10) within the outer valve case (2) along the longitudinal axis (A) between a closed position, in which the valve body (10) is closer to the first end (4) of the outer valve case (2), and an open position, in which the valve body (10) is closer to the second end (6) of the outer valve case (2). The outer valve case (2) comprises a plurality of radial ports (3) distributed around a circumferential portion (5) of the outer valve case (2), wherein the radial ports (3) are arranged such that the valve body (10) seals the radial ports (3) when the valve body (10) is in the closed position and such that the valve body (10) does not seal the radial ports (3) when the valve body (10) is in the open position. The outer valve case (2) further comprises a bleed port (7) arranged at a wall portion of the outer valve case (2) positioned between the first end (4) of the outer valve case (2) and the circumferential portion (5) around which the radial ports (3) are distributed. The disclosure further relates to a steering damper comprising the valve and to a method of assembling a valve for a steering damper.

## Description

### Technical Field

The present disclosure relates to an electronically controlled valve for a steering damper of a vehicle, and more particularly, to an electronically controlled valve supporting high and low damping forces. The disclosure also relates to a steering damper comprising said electronically controlled valve and is particularly intended for use on a two-wheeled vehicle.

### Background

During operation of a vehicle, the steering system can be subject to vibrations and shocks from the driving surface. Steering systems typically include a steering damper or a steering stabilizer to absorb or dampen the vibrations and shocks from the driving surface.

Some known steering dampers comprise electronically controllable valves comprising a needle valve which controls a fluid flow through the valve. Such a prior art valve is described in WO 2010/002314 A1. The valve comprises a needle valve, referred to as a first valve body, controlled by an actuator. A drawback of the valve is that when the first valve body is moved axially to open for a damping medium flow through the valve, a relatively high damping medium flow is allowed to pass therethrough causing a sudden response in the damper. This results in a valve that is relatively insensitive to lower damping forces.

On the other hand, larger fluid pressures, caused by higher forces, increase forces on the needle, which in turn leads to the need of a stronger actuator to control movement of the needle subjected to high forces in order to open or close the valve. The strength is proportionally related to the size of the actuator. Since steering dampers often need to be small, e.g., to fit on a bicycle or a motorcycle, a small actuator is required. The force to be provided by the actuator is thus limited. To minimize the force needed, the valve design must accommodate this.

Hence, there is a need for a valve that may control a damper medium flow with high pressure with great precision, such to support both higher and lower damping forces.

### Summary

It is an object to mitigate, alleviate or eliminate one or more of the above-identified deficiencies in the art and disadvantages singly or in any combination and to solve at least the above-mentioned problem.

According to a first aspect of the invention, a valve for regulating a damper medium flow in a steering damper is provided. The valve comprises an outer valve case extending around a longitudinal axis from a first end to a second end, a valve body arranged in the outer valve case and longitudinally slidable therein and a housing connected with the outer valve case. The housing houses an electronic actuator operatively coupled to the valve body for moving the valve body within the outer valve case along the longitudinal axis between a closed position, in which the valve body is closer to the first end of the outer valve case, and an open position, in which the valve body is closer to the second end of the outer valve case. The outer valve case comprises a plurality of radial ports distributed around a circumferential portion of the outer valve case. The radial ports are arranged such that the valve body seals the radial ports when the valve body is in the closed position and such that the valve body does not seal the radial ports when the valve body is in the open position. The outer valve case further comprises a bleed port arranged at a wall portion of the outer valve case positioned between the first end of the outer valve case and the circumferential portion around which the radial ports are distributed.

The position of the valve body in relation to the outer valve case determines the damper medium flow through the valve, and thereby also the damping characteristics of a steering damper when the valve is mounted therein. Due to the radial ports distributed around a circumferential portion of the outer valve case, the movement of the valve body between the closed position and the open position allows for a gradual flow of damper medium through the radial ports, providing responses in the steering damper, e.g., due to changes in driving conditions, with high accuracy. In some embodiments, the radial ports are evenly distributed around the circumferential portion of the outer valve case.

Typically, when the valve is arranged in a steering damper, the first end of the outer valve case is in fluid connection with a first damping chamber of the steering damper, whereas the radial ports and the bleed port are in fluid connection with a second damping chamber of the steering device. The bleed port allows a constant two-way flow of damper medium such that even when the valve body is in the closed position, there can be a flow of damper medium through the valve between two damping chambers of a steering device in which the valve is arrangeable. The bleed port and the positioning of the bleed port thus provides a failsafe function to prevent overpressure in the valve. In comparison with a valve not having a bleed port positioned as such, the flow of damper medium through the bleed port enables pressure balancing such that the pressure on the actuator decreases, allowing a smaller actuator.

The valve being electronically actuated by the electronic actuator is advantageous in that it allows for automatic adjustment of the damping characteristics based on the speed and acceleration of the vehicle. Alternatively, the electronic actuator also allows easy manual adjustment of the damping characteristics of the vehicle on which the valve and the steering damper is arranged, including during use of the vehicle. For example, a driver may adjust the control signal controlling the electronic actuator via a control which e.g. may be mounted on the vehicle close to where a driver holds the vehicle.

In accordance with an embodiment, the valve body comprises a cylindrical portion, which cylindrical portion abuts a circumferential inner wall surface portion of the outer valve case. The cylindrical portion of the valve body enables a sealing of the radial ports, when the valve body is in the closed position, while being in abutment with the circumferential inner wall surface portion. Thus, the cylindrical portion of the valve body is slidable against the circumferential inner wall surface portion of the outer valve case, allowing movement of the valve body between the open and the closed positions. Furthermore, the abutment of the cylindrical portion of the valve body with the circumferential inner wall surface seals off the interior of the second end of the outer valve case from the damper medium which flows through the valve during use in a steering damper. Thereby the electronic actuator is protected from any damper medium flow.

In other embodiments, provided that an inner wall surface of the outer valve case has the same shape as an outer portion of the valve body being in abutment with the inner wall, the shape of the outer portion of the valve body may be rectangular, cubical, oval or of another suitable shape.

In accordance with an embodiment, the valve body further comprises a conical portion axially adjacent the cylindrical portion, wherein a narrower end of the conical portion is arranged closer to the first end of the outer valve case than a broader end of the conical portion, and the broader end of the conical portion is adjacent the cylindrical portion of the valve body. The conical portion of the valve body guides damper medium entering the valve, thereby reducing turbulence and flow resistance through the valve, making the valve more energy efficient. It should be noted that the portion of the valve body axially adjacent the cylindrical portion may have other shapes, such as a blunt surface, a spherical shape or another suitable shape, within the concept of the present disclosure. Further, providing a valve body comprising a cylindrical portion and a conical portion, wherein the conical portion is exchangeable is also possible within the concept of the present disclosure and enables a modular design using valve bodies with a differently shaped conical portion for different valves as may be required.

In accordance with an embodiment, the valve further comprises 2-10 radial ports, 3-8 radial ports, or 3-6 radial ports. When the number of radial ports exceeds 2, the damper medium flow is more evenly distributed, allowing a more symmetrical flow of damper medium through the radial ports, and thus a more gradual change of flow therethrough, as the valve body is moved between a closed and an open position. This is advantageous in that it provides high accuracy in the responses of the steering damper due to changes in driving conditions. Distributing the radial ports evenly around a circumferential portion of the outer valve case further enhances this effect.

In accordance with an embodiment of the valve, the outer valve case comprises a first circumferential portion and a second circumferential portion, adjacent the first circumferential portion, around each of which the radial ports are distributed, wherein the radial ports of the first and of the second circumferential portion are arranged with an offset with respect to each other. By having the radial ports arranged with an offset at different circumferential portions, the flow of the damper medium is gradually increased or decreased as the valve body is moved between the closed and the open positions, providing thereby a high precision in relation to changes in the driving conditions. This is advantageous in that it provides responses in the steering damper due to changes in driving conditions that are smooth and have a high accuracy.

In accordance with an embodiment of the valve, the valve body comprises an inner channel having an inlet at a first end of the valve body and an outlet at a circumferential wall portion of the valve body to provide for pressure compensation of the valve. The valve body is configured such that when the valve body is moved between the open position and the closed position, due to pressure differences within the valve, the damper medium is either entering or exiting the inlet of the inner channel. When the damper medium is transferred from a higher pressure to a lower pressure, it balances the pressure within the valve, resulting in a reduced force exerted on the electronic actuator. The inner channel thus enables pressure balancing of the valve body to make the movement of the valve body substantially pressure independent. A pressure balanced valve body enables use of a smaller and/or a faster electronic actuator since the actuator does not have to work as hard to withstand loads acting on the valve body. The inner channel providing pressure compensation thus reduces the load on the drive unit, which is advantageous.

In accordance with an embodiment of the valve, the electronic actuator comprises a lead screw nut, a lead screw, and a drive unit. The lead screw nut has a longitudinal extension from a first end to a second end, and a first end portion of the lead screw nut comprises a piston, which piston is coupled with an end portion of the valve body. The lead screw is operatively connected with the drive unit such that when the drive unit is operated, a rotational movement of the lead screw is induced which generates a linear movement of the lead screw nut for moving the valve body along the longitudinal axis of the outer valve case between the open and closed positions.

In accordance with an embodiment of the valve, the lead screw has a trapezoidal thread profile at an outer surface of its longitudinal extension and the lead screw nut has a complementary trapezoidal thread profile at an inner surface thereof. The trapezoidal thread profile has a high efficiency and load capacity. This is advantageous in that it provides an efficient and durable actuator for the valve.

In accordance with an embodiment of the valve, the trapezoidal thread profiles of the lead screw and the lead screw nut has a major diameter of 1.5-3 mm, such as 2 mm, a pitch of 0.3-0.5 mm, such as 0.4 mm, and a thread angle of 30°.

In comparison to an ISO metric screw thread, commonly referred to as M series threads, and particularly to the standard M2 thread, the specified trapezoidal thread profile, having a greater contact surface, provides higher efficiency and an increased lifespan of the actuator and, thus, of the valve.

In accordance with an embodiment of the valve, the trapezoidal thread profiles of the lead screw and the lead screw nut are thread rolled trapezoidal thread profiles. That is, the trapezoidal threads of the lead screw and of the lead screw nut may be produced by a thread rolling manufacturing process by compression between rotating or reciprocating dies, wherein a trapezoidal thread profile is ground into the dies. This provides a smooth surface finish to the trapezoidal threads of the lead screw and lead screw nut, resulting in a reduction of friction with the corresponding threads in contact therewith. This in turn leads to the reduction of wear and therefore the prolongation of the service life of the lead screw and lead screw nut, and thereby also of the valve, which is advantageous.

In accordance with an embodiment of the valve, the electronically controlled actuator comprises a step motor. The step motor enables control of the position of the valve body with no further parts, as opposed to using e.g., a solenoid which requires the valve body to be biased against the force of the solenoid in order to allow control of the position of the valve body. A step motor provides precise control in steering dampers, allowing for quick and accurate responses to changes in driving conditions, which improves vehicle stability and handling. In addition to precision control, step motors offer high energy efficiency, consuming less power than other types of motors. This energy efficiency reduces the overall vehicle power consumption, resulting in improved fuel economy. Moreover, a step motor is small in size, which is advantageous for steering dampers.

In accordance with an embodiment of the valve, the valve further comprises an elastic member arranged at the first end portion of the lead screw nut and at a portion of the valve body, configured to reduce a movement which may occur from an axial clearance between the lead screw and the lead screw nut. The reduction of the movement allows for an increased precision in positioning of the of the valve body along the longitudinal axis, in relation to the radial ports at the circumferential inner wall, such that the response in the steering damper is less sudden and, instead, smooth and precise.

In accordance with an embodiment of the valve, the housing is attachable to the outer valve case by press-fitting. The press-fitting attachment of the housing to the outer valve case ensures a robust and reliable joint that is resistant to thermal expansion and contraction and mechanical stress, making it ideal for applications that require high precision and reliability.

According to a second aspect of the invention, a steering damper comprising the valve is provided.

According to a third aspect of the disclosure, a method of assembling a valve for a steering damper is provided. The method comprises the steps of providing an outer valve case extending around a longitudinal axis from a first end to a second end and comprising a valve body arranged longitudinally slidably therein. The method further comprises the step of inserting a first end of a housing comprising a lead screw nut into the second end of the outer valve case by press-fitting, whereby a first end of the lead screw nut engages an end portion of the valve body. The method further comprises the step of inserting a drive unit, at one end connected with a lead screw and at another end connected with a housing cap, into a second end of the housing. The housing cap comprises a snap-lock connector. The method further comprises the step of connecting the snap-lock connector of the housing cap to the housing. This provides for an easy and efficient assembly of the valve, not requiring any external fasteners.

Effects and features of the second and third aspects are largely analogous to those described above in connection with the first aspect. Embodiments mentioned in relation to the first aspect are largely compatible with the second and third aspects. It is further noted that the inventive concepts relate to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the invention disclosure will become apparent to those skilled in the art from this detailed description.

Hence, it is to be understood that this invention disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The invention disclosure will by way of example be described in more detail with reference to the appended schematic drawings, which shows presently preferred embodiments of the disclosure.
Fig. 1 is a partly cut-away perspective view of a valve for a steering damper according to an embodiment of the present disclosure.
Figs. 2A-2C show an outer valve case and a valve body of the valve of Fig. 1 in different positions.
Fig. 3 is a perspective view of an outer valve case of a valve according to an embodiment of the present disclosure.
Fig. 4 is an exploded, partly cut-away, view of a detail of the valve of Fig. 1.
Fig. 5 is a partly cut-away view of a detail of a valve according to an embodiment of the present disclosure.
Fig. 6 is a flow chart for a method according to an embodiment of the third aspect of the present disclosure.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and to fully convey the scope of the disclosure to the skilled person.

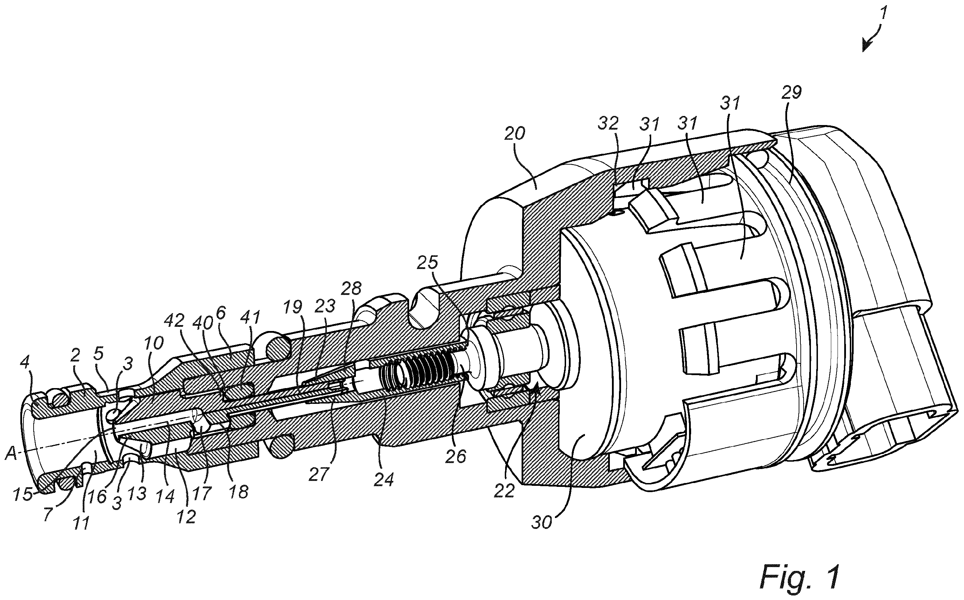

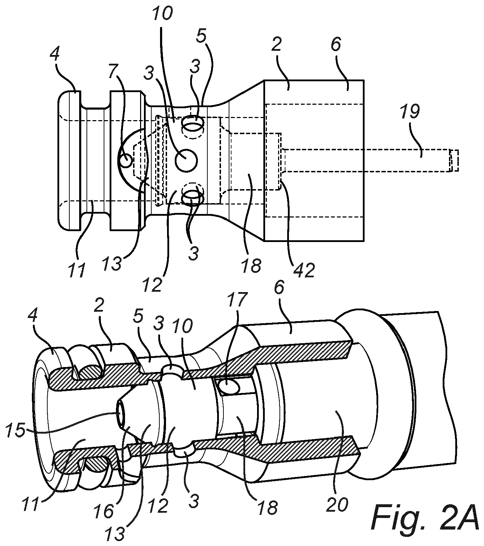

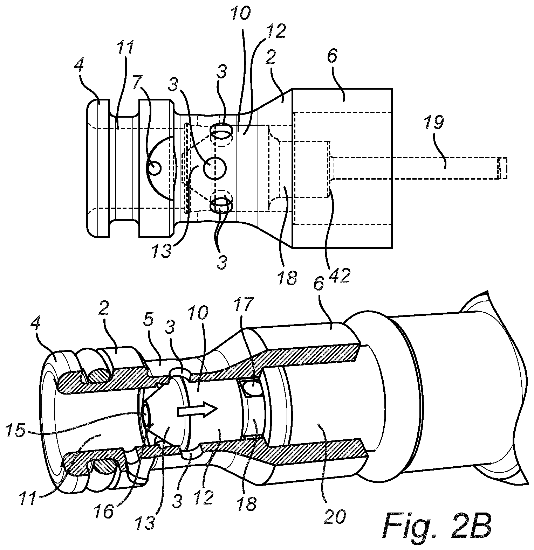

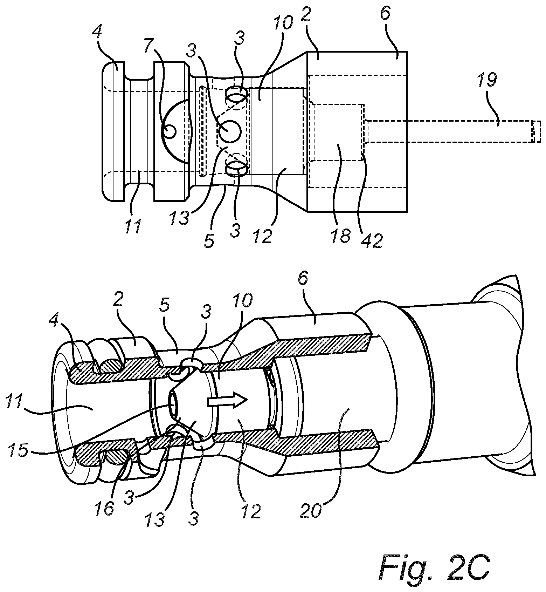

Fig. 1 shows a valve 1 for a steering damper according to an embodiment of the present disclosure. The valve 1 comprises an outer valve case 2 extending around a longitudinal axis A from a first end 4 to a second end 6. The outer valve case 2 is in this exemplifying embodiment essentially cylindrical and has an inner circumferential wall surface 11. The outer valve case 2 comprises a plurality of radial ports 3 evenly distributed around a circumferential portion 5 of the outer valve case 2, here a central circumferential portion 5, as best seen in and described with more detail with reference to Figs. 2-3. Furthermore, the outer valve case 2 comprises a bleed port 7 arranged at a wall portion of the outer valve case 2 positioned between the first end 4 of the outer valve case 2 and the circumferential portion around which the radial ports 3 are distributed.

The valve 1 further comprises a valve body 10 arranged in the outer valve case 2 and longitudinally slidable in the outer valve case 2 along the longitudinal axis A. More particularly, and as can be seen in Fig. 1, the valve body 10 comprises a cylindrical portion 12, and the outer surface of the cylindrical portion 12 abuts a circumferential portion of the inner circumferential wall surface 11 of the outer valve case 2. The valve body 10 further comprises a conical portion 13, the broader end of which is adjacent the cylindrical portion 12 of the valve body 10 and the narrower end of which is arranged closer to the first end 4 of the outer valve case 2 than the broader end. The valve body 10 further comprises an inner channel 14 having an inlet 15 at a first end 16 of the valve body 10 and an outlet 17 at a circumferential wall portion 18 of the valve body 10 to provide for pressure compensation of the valve 1.

The valve 1 further comprises an adjustable chamber 40 arranged between a sealing member 41 and a rear portion 42 of the valve body 10, such that the outlet 17 of the valve body 10 is in fluid connection with the adjustable chamber.

The valve 1 further comprises a housing 20 which is partly insertable into the outer valve case 2 at the second end 6 thereof. In view of this disclosure, the skilled person understands that providing an outer valve case 2 which is at least partly insertable into the housing 20 is also conceivable within the concept of the present disclosure, as is connecting the housing 20 with the outer valve case 2 by other means. The housing 20 houses an electronic actuator 22 which is operatively coupled to the valve body 10 for moving the valve body 10 within the outer valve case 2 along the longitudinal axis A between a closed position (see Fig. 2A), in which the valve body is closer to the first end 4 of the outer valve case 2, and an open position (see Fig. 2C), in which the valve body is closer to the second end 6 of the outer valve case 2.

Figs. 2A-2C show the outer valve case 2 and the valve body 10 of the valve 1 described with reference to Fig. 1 when arranged in three different positions. More particularly, Fig. 2A shows the valve body 10 in the closed position. In the closed position, the radial ports 3 of the outer valve case 2 are sealed by the valve body 20. Fig. 2C shows the valve body 10 in the open position. In the open position, the radial ports 3 of the outer valve case 2 are not sealed by the valve body 20. Fig. 2B shows the valve body 10 in a position between the open and closed position, in which the radial ports 3 of the outer valve case 2 are partly sealed by the valve body 10. The valve body 10 is thus movable, within the outer valve case 2 and by the electronic actuator 22, between the open and the closed position.

Continuing with reference to Fig. 1, the electronic actuator 22 comprises a lead screw nut 24, a lead screw 26, and a drive unit 30. The lead screw nut 24 has a longitudinal extension from a first end 23 to a second end 25, and a first end portion 27 of the lead screw nut 24 comprises a piston 28, which piston 28 is coupled with an end portion 19 of the valve body 10. The lead screw 26 is operatively connected with the drive unit 30 such that, when the drive unit 30 is operated, a rotational movement of the lead screw 26 is induced which generates a linear movement of the lead screw nut 24 for moving the valve body 10 along the longitudinal axis A of the outer valve case 2 between the open and closed positions. As a drive unit 30 for the electronic actuator 22, a step motor may be used.

In the exemplifying embodiment shown in Fig. 1, the housing 20 is attached to the outer valve case 2 by press-fitting. That is, no external fasteners are used for connecting the housing 20 to the outer valve case 2. Furthermore, the housing 20 comprises a housing cap 29. The housing cap 29 comprises a plurality of snap-lock connectors 31 arranged to engage a recess 32 at an inner wall surface of the housing 20 to form a snap-lock engagement there between. Thus, no external fasteners are needed to hold the valve 1 together.

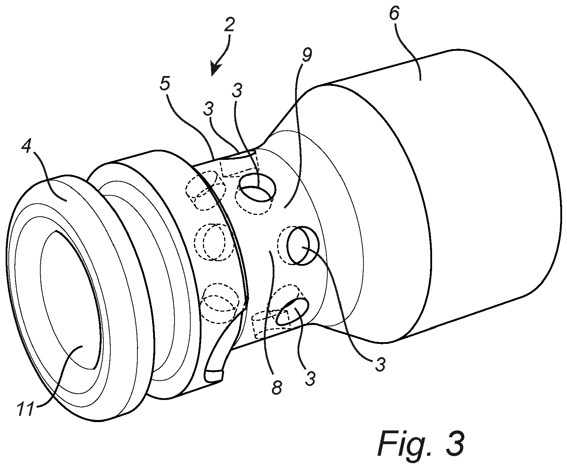

With reference to Fig. 3, an outer valve case 2 according to an embodiment of the disclosure is shown. In this exemplifying embodiment, the outer valve case comprises 8 radial ports 3. However, providing a higher or lower number of ports is also conceivable within the concept of the present disclosure, such as 2-10 radial ports 3, 3-8 radial ports 3, or 3-6 radial ports 3. Further, in the embodiment shown in Fig. 3, the outer valve case 2 comprises a first circumferential portion 8 and a second circumferential portion 9, the second circumferential portion 9 being adjacent the first circumferential portion 8, and radial ports 3 are distributed around each of the first and second circumferential portions 8, 9. As can be seen in Fig. 3, the radial ports 3 distributed around the first circumferential portion 8 is here arranged with an offset with respect to the radial ports 3 distributed around the second circumferential portion 9. Providing radial ports 3 distributed around the circumferential portion 5, or around the first and second circumferential portions 8, 9, without an offset is, however, also possible within the concept of the present disclosure.

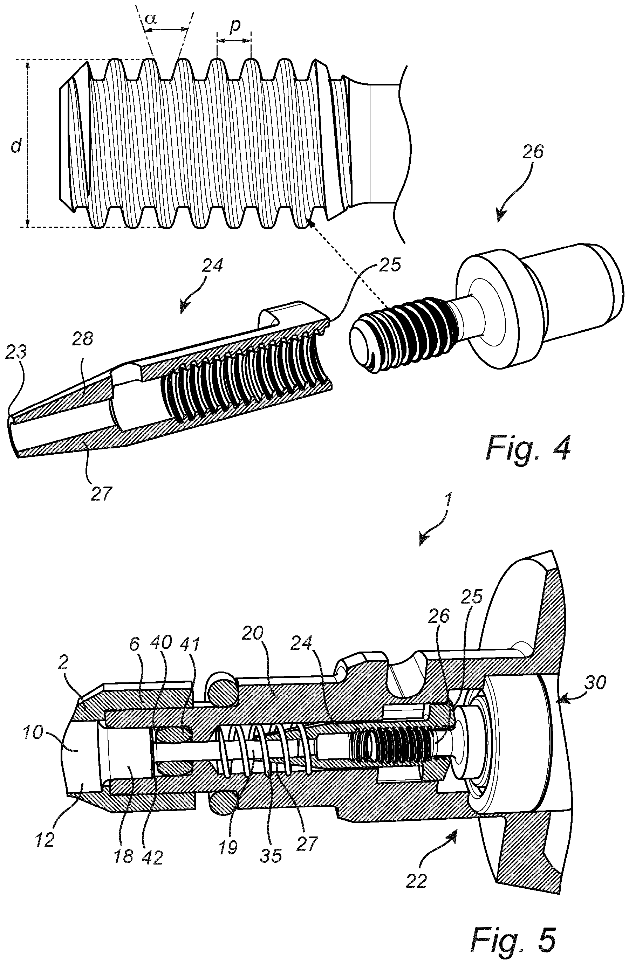

With reference to Fig. 4, a detailed exploded view of the lead screw 26 and the lead screw nut 24 of the valve 1 according to an embodiment of this disclosure is shown. Here, the lead screw 26 and the lead screw nut 24 each has a trapezoidal thread profile. Preferably, the trapezoidal thread profiles of the lead screw 26 and the lead screw nut 24 are thread rolled trapezoidal thread profiles. The trapezoidal thread profiles of the lead screw 26 and the lead screw nut 24 may have a major diameter d in the range of 1.5-3 mm, such as 2 mm. The trapezoidal thread profiles of the lead screw 26 and the lead screw nut 24 may further have a thread angle α of 30°. The trapezoidal thread profiles of the lead screw 26 and the lead screw nut 24 may further have a pitch p in the range of 0.2-0.5 mm, such as 0.4 mm. This provides a rather small thread which is efficient since energy losses are reduced.

With reference to Fig. 5, a detail of the valve 1 according to another embodiment of the present disclosure is shown. With respect to the embodiment shown and described with reference to Fig. 1, in this embodiment, the valve 1 further comprises an elastic member 35 arranged at the first end portion 27 of the lead screw nut 24 and around the end portion 19 of the valve body 10. The elastic member 35, here embodied as a spring, is so arranged to reduce a movement which may occur from an axial clearance between the lead screw 26 and the lead screw nut 24.

In use in a steering damper, the valve 1 is arrangeable with the first end portion 4 of the outer valve case 2, which is cylindrical, serving as an inlet and an outlet of the valve 1 for damper medium. The first end portion 4 of the outer valve case 2 is thus arrangeable to be in fluid connection with a first damping chamber of the steering damper. When the electronic actuator 22 is actuated to move the valve body 10 from the closed position towards an open position, damper medium is allowed to flow through the radial ports 3, as these become unsealed by the valve body 10, towards a second damping chamber of the steering damper. If the second damping chamber is pressurized, the damper medium flow may also flow therefrom through the radial ports 3 and through the first end portion 4 of the outer valve case 2 to the first damping chamber when the valve body 10 is in the open position, or in a partially open position. Thereby, the valve 1 is arrangeable in a steering damper for regulating a damper medium flow therein.

The bleed port 7, arranged at a wall portion of the outer valve case 2 positioned between the first end 4 of the outer valve case 2 and the circumferential portion 12 around which the radial portions 3 are distributed, is further arranged, when the valve 1 is arranged in a steering damper, in fluid connection with the second damping chamber of the steering damper. The bleed port 7 thus allows a small flow of damper medium between the first and second damping chambers of the steering device such to provide a failsafe function, preventing overpressure in the damper.

Further when in use in a steering damper, the damper medium allows pressure to propagate within the inner channel 14 of the valve body 10 and within the adjustable chamber 40 that is in fluid connection with the inner channel 14, such to facilitate pressure compensation of the valve 1. That is, the damper medium within the inner channel 14 and the adjustable chamber 40 allows the pressure acting on the valve body 10 to propagate from a higher pressure to a lower pressure, providing pressure compensation for the valve 1.

Further, when the valve body 10 is moved from the open position to the closed position, a pressure is acting on the first end portion 16 of the valve body 10, causing the electronic actuator 22 to act with a great force on the valve body 10. To enable axial movement of the valve body 10 with less force, the inner channel 14 within the valve body 10 allows the damper medium to flow from the inlet 15 to the outlet 17. As the valve body 10 is moved from the open position to the closed position, the volume of the adjustable chamber increases. Conversely, when the valve body 10 is moved from the closed position to the open position, the volume of the adjustable chamber 40 decreases. Thus, when the valve body 10 transitions from the open position to the closed position, damper medium flows through the inner channel 14, entering the adjustable chamber 40, thus reducing the pressure acting on the first end 16 of the valve body 10. Conversely, when the valve body 10 is moved from the closed position to the open position, damper medium flows from the adjustable chamber 40 towards the inlet 15, reducing the pressure within the adjustable chamber 40. This allows the electronic actuator 22 to exert less force when moving the valve body 10, thus enabling the actuation of the steering damper using a smaller electronic actuator 22.

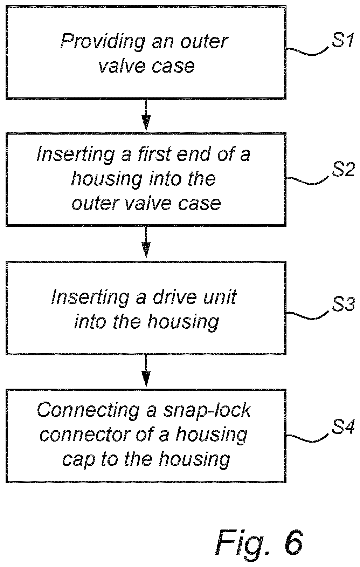

The valve 1 disclosed herein may be assembled by a method (Fig. 6) comprising the steps of providing (S1) the outer valve case 2 with the valve body 10 arranged longitudinally slidably therein, inserting (S2) a first end of the housing 20 comprising the lead screw nut 24 into the second end 6 of the outer valve case 2 by press-fitting, whereby the first end 23 of the lead screw nut 24 engages the end portion 19 of the valve body 10. The method further comprises inserting (S3) the drive unit 30, at one end connected with the lead screw 26 and at the other, opposing, end connected with the housing cap 29, into a second end of the housing 20, and connecting (S4) the snap-lock connector 31 of the housing cap 29 to the housing 20, thereby providing the assembled valve 1.

The person skilled in the art realizes that the present disclosure by no means is limited to the preferred embodiments described above. On the contrary, many modifications and variations are possible within the scope of the appended claims.

Additionally, variations to the disclosed embodiments can be understood and effected by the skilled person in practicing the claimed disclosure, from a study of the drawings, the disclosure, and the appended claims.

## Claims

1. A valve for regulating a damper medium flow in a steering damper, the valve comprising
an outer valve case extending around a longitudinal axis from a first end to a second end;
a valve body arranged in the outer valve case and longitudinally slidable therein; and
a housing connected with the outer valve case,
wherein the housing houses an electronic actuator operatively coupled to the valve body for moving the valve body within the outer valve case along the longitudinal axis between a closed position, in which the valve body is closer to the first end of the outer valve case, and an open position, in which the valve body is closer to the second end of the outer valve case,
wherein the outer valve case comprises a plurality of radial ports distributed around a circumferential portion of the outer valve case, wherein the radial ports are arranged such that the valve body seals the radial ports when the valve body is in the closed position and such that the valve body does not seal the radial ports when the valve body is in the open position, and
wherein the outer valve case further comprises a bleed port arranged at a wall portion of the outer valve case positioned between the first end of the outer valve case and the circumferential portion around which the radial ports are distributed.

2. The valve according to claim 1, wherein the valve body comprises a cylindrical portion, which cylindrical portion abuts a circumferential inner wall surface portion of the outer valve case.

3. The valve according to claim 2, wherein the valve body further comprises a conical portion axially adjacent the cylindrical portion, wherein a narrower end of the conical portion is arranged closer to the first end of the outer valve case than a broader end of the conical portion, and the broader end of the conical portion is adjacent the cylindrical portion of the valve body.

4. The valve according to any one of the preceding claims comprising 2-10 radial ports, 3-8 radial ports, or 3-6 radial ports.

5. The valve according to any one of the preceding claims, wherein the outer valve case comprises a first circumferential portion and a second circumferential portion, adjacent the first circumferential portion, around each of which the radial ports are distributed, wherein the radial ports of the first and of the second circumferential portion are arranged with an offset with respect to each other.

6. The valve according to any one of the preceding claims, wherein the valve body comprises an inner channel having an inlet at a first end of the valve body and an outlet at a circumferential wall portion of the valve body to provide for pressure compensation of the valve.

7. The valve according to any one of the preceding claims, wherein the electronic actuator comprises a lead screw nut, a lead screw, and a drive unit, wherein the lead screw nut has a longitudinal extension from a first end to a second end, and a first end portion of the lead screw nut comprises a piston, which piston is coupled with an end portion of the valve body, and wherein the lead screw is operatively connected with the drive unit such that when the drive unit is operated, a rotational movement of the lead screw is induced which generates a linear movement of the lead screw nut for moving the valve body along the longitudinal axis of the outer valve case between the open and closed positions.

8. The valve according to claim 7, wherein the lead screw has a trapezoidal thread profile at an outer surface of its longitudinal extension and the lead screw nut has a complementary trapezoidal thread profile at an inner surface thereof.

9. The valve according to claim 8, wherein the trapezoidal thread profiles of the lead screw and the lead screw nut has a major diameter of 1.5-3 mm, a thread angle of 30° and a pitch of 0.3-0.5 mm.

10. The valve according to any one of claims 8-9, wherein the trapezoidal thread profiles of the lead screw and the lead screw nut are thread rolled trapezoidal thread profiles.

11. The valve according to any one of the preceding claims, wherein the electronic actuator comprises a step motor.

12. The valve according to any one of claims 7-11, wherein the valve further comprises an elastic member arranged at the first end portion of the lead screw nut and at a portion of the valve body, configured to reduce a movement which may occur from an axial clearance between the lead screw and the lead screw nut.

13. The valve according to any one of the preceding claims, wherein the housing is attachable to the outer valve case by press-fitting.

14. A steering damper comprising the valve according to any one of the preceding claims.

15. A method of assembling a valve for a steering damper, the method comprising the steps of:
providing an outer valve case extending around a longitudinal axis from a first end to a second end and comprising a valve body arranged longitudinally slidably therein;
inserting a first end of a housing comprising a lead screw nut into the second end of the outer valve case by press-fitting, whereby a first end of the lead screw nut engages an end portion of the valve body;
inserting a drive unit, at one end connected with a lead screw and at another end connected with a housing cap, into a second end of the housing, wherein the housing cap comprises a snap-lock connector; and
connecting the snap-lock connector of the housing cap to the housing.
